Europäisches Patentamt

(19) European Patent Office

Office européen des brevets

(11) Publication number: **0 235 902 B1**

(12) **EUROPEAN PATENT SPECIFICATION**

(45) Date of publication of patent specification :
10.07.91 Bulletin 91/28

(21) Application number : 87300562.3

(22) Date of filing : 22.01.87

(51) Int. Cl.⁵ : **H04N 5/272, H04N 1/387**

(54) **Digital image processing.**

(30) Priority : 23.01.86 GB 8601652

(43) Date of publication of application :
09.09.87 Bulletin 87/37

(45) Publication of the grant of the patent :
10.07.91 Bulletin 91/28

(84) Designated Contracting States :
DE GB

(56) References cited :
DE-A- 3 247 785
GB-A- 2 113 950
GB-A- 2 130 838
GB-A- 2 153 181
US-A- 4 561 061
IEEE JOURNAL OF SOLID-STATE CIRCUITS,
vol. SC-12, no. 1, February 1977, pages 65-72,
IEEE, New York, US; P.I. SUCIU et al.: "Image
contour extraction with analog MOS circuit
techniques"

(73) Proprietor : CROSFIELD ELECTRONICS
LIMITED
De La Rue House 3/5 Burlington Gardens
London W1A 1DL (GB)

(72) Inventor : Roe, Malcolm David McKinnon
4 Studham Lane Dagnall
Berkhampstead, Herts (GB)
Inventor : Reed, Alastair
5 The Gables Linslade
Leighton Buzzard Bedfordshire LU7 7PQ (GB)

(74) Representative : Skone James, Robert
Edmund et al
GILL JENNINGS & EVERY 53-64 Chancery
Lane
London WC2A 1HN (GB)

## Description

The invention relates to methods and apparatus for merging a portion of a first digitally encoded image defined by a mask into a second digitally encoded image by copying into the second image that portion of the first image defined by the mask.

Conventional digital image processing equipment, such as our Studio 800 series, enables pages to be composed from a number of different images at relatively low resolution. Part or all of the page is viewed on a monitor as it is composed. In order to select a portion of an image to be included in the page, the operator displays the full image on the monitor and, using a cursor and a digitising table, draws an outline around the portion of the displayed image to be included in the page in order to define the coordinates of the boundary of that image portion. The controlling computer then makes use of this defined boundary to generate a mask to extract the selected portion of the image. Typically the operator views the mask boundary so as to modify the boundary to take account of the errors inherent in a manual system for defining the boundary. The selected portion of the image is then transferred to or merged with the page being composed at a predetermined position.

Examples of known methods and apparatus of this type are described in GB-A-2130838 and GB-A-2113950. The first of these documents describes the use of an 8-bit mask to define an image portion for merging with another image. In each case the mask is generated by reference to a manual outline.

This conventional system suffers from the disadvantage that a large amount of manual processing is required before the final image portion is correctly defined.

In accordance with one aspect of the present invention, a method of merging a portion of a first digitally encoded image defined by a mask into a second digitally encoded image by copying into the second image that portion of the first image defined by the mask, is characterized by

    a) automatically determining the position of edges in the first image by determining the position of relatively high frequencies in the first image ; and

    b) defining the mask by selecting a number of the determined edges which define at least part of an outline coinciding with the boundary of the selected portion of the first image.

In accordance with a second aspect of the present invention, apparatus for merging a portion of a first digitally encoded image defined by a mask into a second digitally encoded image by copying into the second image that portion of the first image defined by the mask comprises processing means and memory storage means for storing the first and second images and the merged images, the processing means being adapted to copy into the second image that portion of the first image defined by the mask and to store the merged images in the memory means and is characterized in that the processing means is adapted to determine the position of edges in the first image by determining the position of relatively high frequencies in the first image to define the mask having an outline constituted by a number of the determined edges and coinciding with the boundary of the selected portion of the first image and to store the mask in the memory means.

We have recognised that the creation of a mask outline from a number of previously determined edges is much simpler than manually creating the outline since it simply requires the deletion or modification of the determined edges. Typically, the position of edges will be determined automatically with the processing means, such as a suitably programmed computer, while the edge selection is performed "manually" by interaction between the user and the processing means. However, the edge selection could also, in some cases, be performed automatically.

The invention takes advantage of the fact that in the majority of cases, the selected portion of the first image has a boundary corresponding to a significant change or discontinuity in an image attribute such as luminance, or tristimulus value. If the image is analysed in terms of frequencies, it will be found that this boundary, is defined by relatively high (spatial) frequencies as compared with adjacent portions of the image in which the pixels have substantially the same attribute and thus are characterised by a relatively low (spatial) frequency. The removal of these low frequencies, by for example applying a high pass filter to the first image, enables the mask defining the selected image portion to be automatically generated.

In the case of screened images account would need to be taken of the screen frequency.

Preferably, step b) comprises displaying the determined edges to enable an operator to construct the mask outline. This manual construction may involve connecting some of the previously determined edges together where the edges are ill-defined in the original image in which case small gaps may exist between them. However, this is not significant since where the edge is indistinct, its position is fairly arbitrary so the manual insertion required does not need to be accurate. As previously mentioned, steb (b) may also involve the deletion of superfluous edges determined in step (a).

In many cases, the first image will comprise a number of image portions defined by changes in colour or contrast and the application of the method to such an image would result in a corresponding number of edges being located. Conveniently therefore the method further comprises, prior to step a), roughly defining the area of the first image which includes the portion to be selected. This can be done manually simply by using the cursor to draw a rough outline around the portion to be selected. This can be done very quickly, particularly in comparison with the conventional technique in which the exact outline of the selected portion was manually produced. Once the rough outline has been generated, the method is then applied only to that part, of the first image within the rough outline. Alternatively, the operator may trace roughly along the desired edge, the method comprising determining the position of an edge within a band of predetermined width centred on the rough outline. This has the advantage of reducing processing time since edges within the body of the outlined region would not be detected.

The extraction of edges by locating relatively high frequencies may be achieved using any conventional digital processing technique such as differentiation (in 1 dimension) or an equivalent two dimensional edge extraction technique. For example, two dimensional "differentiation" can be carried out by convolving the first image with a Laplacian edge function having zero weighting (ie. the sum of the array elements is zero) so that there is no output response over the regions of the first image with a constant luminance. Examples of suitable techniques are described in IEEE Journal of Solid State Circuits, Vol. SC-12, No. 1, Feb 1977, pp 65-72.

Preferably, step a) comprises applying a relatively high pass filter to the first image, for example differentiating the first image, and monitoring the output of the high pass filter to determine when the output is zero but with a non-zero gradient. It will be appreciated that apart from noise, the output from the high pass filter will generally be zero except at image edges when the high pass filter output signal will pass through maxima and minima corresponding to the high frequencies present. The edge of the image corresponds to the point at which the high pass filter output signal is zero while passing between a maximum and a minimum. This could be determined by differentiating the output signal from the high pass filter and comparing the output from this second differentiation with a predetermined threshold. This has the additional advantage that affects due to noise can be eliminated by suitably setting the threshold.

It should be appreciated that this method according to the invention is not only applicable in page composition applications but also to the generation of montages and the like.

One method for avoiding sharp transitions at the boundary between the merged images is to use electronically simulated airbrushing techniques in order to blur the boundary. This is a time consuming technique involving an operator who must accurately airbrush around the entire boundary between the images.

Preferably, therefore, the mask is defined such that the selected portion of the first image overlaps the second image, the method further comprising determining the content of pixels in the overlapping region by applying a predetermined algorithm to the content of corresponding pixels of the two images prior to merging.

This avoids the inherent lack of accuracy in the manual airbrushing techniques by making use of a predetermined algorithm to determine the content of the overlapping region.

In its simplest form, the algorithm may comprise a ramp function which defines a gradual change from 0% of the selected portion of the first image and 100% of the second image to 0% of the second image and 100% of the selected portion of the first image. Other variations are possible eg. 0% of one image and 90% of the other image to 100% of the one image and 20% of the other image and so on. In other words the "total" percentage of the two images can be equal to, less than or greater than 100%.

Conveniently, the step of applying the algorithm may include modifying the shape of the edge of the mask prior to the copying step. In the case where the algorithm defines a ramp function, the edges of the mask may be sloped. This modification may be achieved by convolving the mask with a suitable modifying edge function such as a top hat function.

In general, the algorithm will be applied to the two overlapping pixels from each image but in more complex cases, the algorithm may be applied also to other adjacent pixels from the original images.

In the case of coloured images, the method may be carried out on either a single colour separation or the edge may be defined by combining edges from two or more colour separations to produce a composite edge from which the mask can be generated.

It will be appreciated that these methods are particularly suitable for implementation by a microcomputer.

An example of a method and apparatus for merging images according to the present invention will now be described with reference to the accompanying drawings, in which :

Figure 1 is a block diagram of the apparatus ;
Figure 2 is a flow diagram illustrating operation of the apparatus ;
Figures 3a-3c illustrate the form of an edge of an image portion before differentiation, after a single differentiation, and after a double differentiation respectively ;
Figure 4 illustrates the result of convolving a top hat function with an edge ;
Figure 5 illustrates an alternative edge function ;
Figure 6A illustrates an image from which a mask is generated ;
Figure 6B illustrates the mask boundary at an intermediate stage ; and,
Figure 6C illustrates the final mask.

Methods in accordance with the invention may be carried out on apparatus such as our Studio 800 series after programming the controlling computer appropriately to carry out the novel combination of steps.

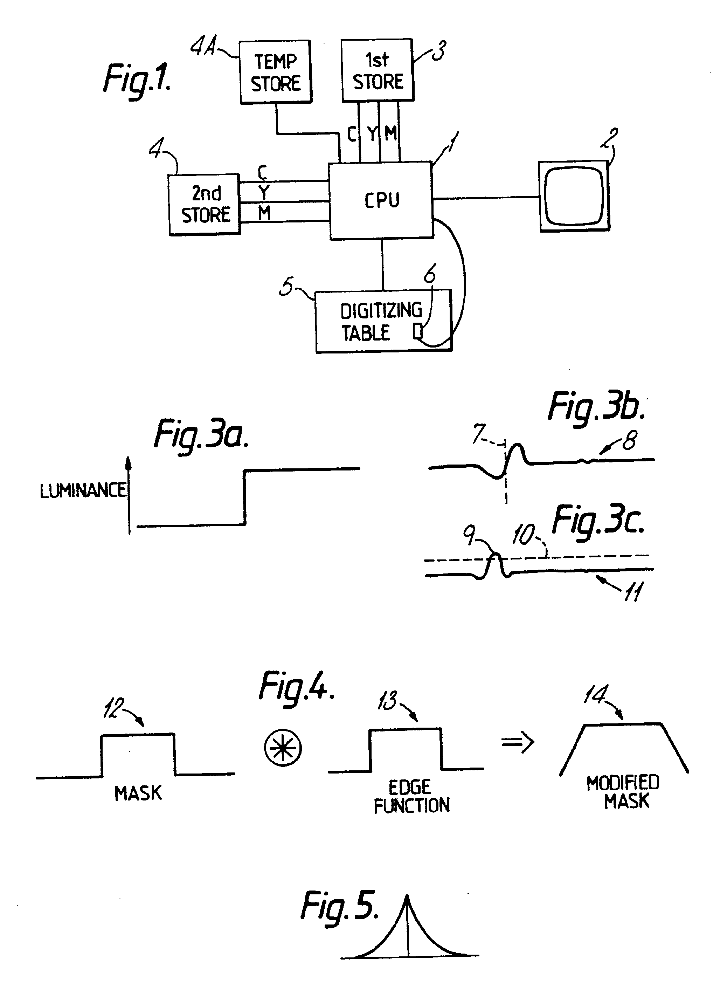

The relevant parts of the apparatus are illustrated diagrammatically in Figure 1 and include a central processing unit 1 such as a suitably programmed microcomputer which is connected to a monitor 2. First and second stores 3, 4, and a temporary store 4A such as RAMs are each connected to the CPU 1. In addition, a conventional digitising table 5 and a cursor 6 for use by an operator are connected to the CPU 1.

In conventional image processing, images are processed at either low resolution or high resolution depending upon the type of processing. For example, in the case of page composition, versions of the images at low resolution images are used since precise details of the image are not required. The method is equally applicable to the processing of both low and high resolution images and a distinction between these will not be drawn in the subsequent description. However, it should be recognized that it is common to define a mask using a relatively low resolution version of the image and then to apply the mask to a corresponding high resolution version of the image.

Initially, a first image is stored in the first store 3 and a second image in the second store 4. These digitally encoded images may have been produced by our Magnascan equipment in a conventional manner. The stores 3, 4 (and 4A) may be provided by different parts of a common memory.

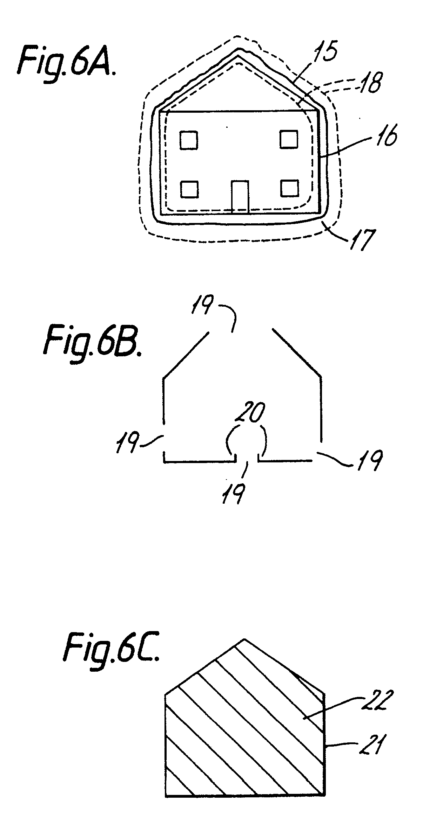

The subsequent, operation, is set out in the flow diagram in Figure 2. Initially, the second image from the store 4 is displayed on the monitor 2 (Figure 6A). Using the cursor 6 on the digitising table 5, the operator draws a rough outline 15 along the edge 16 of that portion of the image displayed on the monitor 2 which he wishes to select. The location of this rough outline is stored by the CPU 1.

In general, coloured images will be processed in which case each image is stored in the stores 3, 4 as three colour separations representing the printing colour components cyan, magenta, and yellow respectively. A decision is then made on which of these colour separations is to be used for locating the edge of the selected image portion. This is preferably done automatically. Cyan or magenta are normally considered to contain the best edge information but this is dependant on the film type used to record the original image. Furthermore edges between particular colours may show better in another separation. It would be possible, for example, to edge extract on all 3 separations and then "vote" by accepting an edge only if present on at least 2 of the separations. Many other approaches are possible producing different trade-offs between a) always recognising an edge when really present and b) never recognising an edge when really not present.

The CPU 1 then responds to a suitable command to differentiate the content of a region 17 centred on the rough outline and with a predetermined width of the digitally encoded separation selected. The region 17 is defined between dotted lines 18 in Figure 6A, the width of the region being selected such that only the desired edge 16 is located in it. This differentiation step may be achieved by applying a suitable edge enhancement array to all pixels in the selected region. Two examples of a suitable Laplacian array are set out below.

$$
\begin{array}{ccc}
0 & -1 & 0 \\
-1 & 4 & -1 \\
0 & -1 & 0
\end{array}
\qquad
\begin{array}{ccc}
-1 & -1 & -1 \\
-1 & 8 & -1 \\
-1 & -1 & -1
\end{array}
$$

It will be noted that these arrays have a zero weighting so that there is no output response over regions of the colour separation with a constant luminance. The results of this differentiation are stored in the temporary store 4A.

Although this step is referred to as "differentiation", in two dimensions a vector output is not obtained. The step is equivalent, however, to one dimensional differentiation as shown in Figure 3.

Figure 3a illustrates a typical change in luminance at a boundary (or edge) of an image portion. Figure 3b indicates the results of a single differentiation where a majority of the resulting signal is zero indicating that the luminance in the original colour separation is constant but there is a rapid change from a minimum to a maximum at the edge. The actual position of the edge is conveniently defined as the point at which the differentiated output passes through zero between the minimum and the maximum. This is indicated by a line 7 in Figure 3b. In other words, the edge is defined by the output of the differentiation step (ie. the application of a high pass filter) being zero with a non-zero gradient.

In theory, this is sufficient to enable the edge to be accurately defined. However, in general there will be some noise and, as indicated at 8 in Figure 3b, this will generate additional points at which the signal is zero but with a non-zero gradient. To deal with this, the resultant signal or array resulting from the first differentiation is further differentiated, in effect by applying a second high pass filter. The edge would then be located by a local maximum or minimum which exceeds an empirically derived threshold. This is indicated in Figure 3c where the result of the second differentiation is a maximum 9 which exceeds a threshold 10. It will be seen that the effect of noise indicated at 11 results in maxima and minima which do not exceed the threshold 10.

The threshold 10 is preferably an adaptive threshold which can be responsive to local image statistics an thus may change around the edge being detected. Thus, the threshold could be selected in accordance with the "business" or frequency content of the local neighbourhood, eg. low in flat areas, high in noisy areas.

In some cases the resulting edges which are extracted and stored in the store 4A are sufficiently complete to define the entire outline of a mask for locating the selected portion of the second image. In general, however, this is not so and as a first step in improving a mask outline definition, the width of the edges is reduced to a single pixel. This is a standard image processing technique. The edges are further enhanced by removing small side branches using standard methods. For example, edges 20 (Figure 6B) due to the "door" feature in the original image are deleted. The resulting edges are then displayed on the monitor 2 (Figure 6B) and if there are any gaps (such as gaps 19), these can be filled in by the operator using the cursor 6 on the digitising table 5 to define a complete mask outline or boundary 21. The area within the outline is then filled in for example with binary 1 to define the mask as in conventional methods. This mask 22 is stored in the store 4A.

This Mask can then be used in a conventional manner to extract the selected portion of the second image from the store 4 and to insert the selected portion into a defined area of the image stored in the first store 3. In order to avoid a sharp discontinuity between the two images, it is conventional thereafter to use a digital airbrushing technique to blur the boundary between the two images.

In an alternative method before the mask is used to extract a portion of the image in the second store 4, it is convolved with a suitable edge function. Figure 4 illustrates at 12 a cross-section through the edge of a mask. It will be seen that the sides of this edge are abrupt and the direct application of this mask in the merging process would result, in the merged picture, in a sudden change from a pixel of one image to a pixel of the other image. Instead, in this example, the mask is convolved with a top hat function 13 to produce a modified edge which is ramped as indicated at 14.

The effect of the ramped edges is that instead of a sudden change from 100% of one image to 100% of the other image in the merged picture, the change is more gradual and the ramp defines intermediate pixels in an overlapping region of the two images including for example 20% of one image and 80% of the other image. The width of the ramp portion can be varied depending upon the particular images being combined and may range from one pixel upwards. Clearly the greater the width, the more blurred the transition.

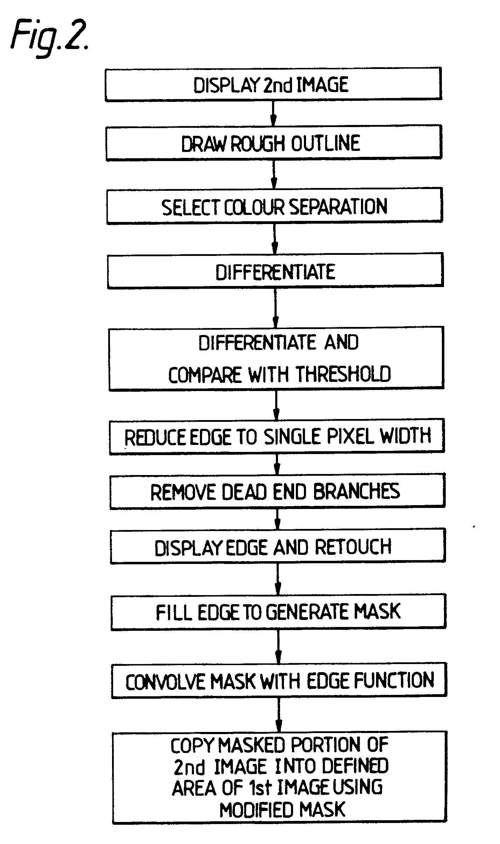

Figure 5 illustrates an alternative form of edge function to the top hat function 13, which would give a slow merge with one image and a fast merge with the other image. Clearly, there are many other types of edge function which could be used.

It should be understood that the copying step will be repeated for each colour separation.

## Claims

1. A method of merging a portion of a first digitally encoded image defined by a mask into a second digitally encoded image by copying into the second image that portion of the first image defined by the mask, characterized by
   a) automatically determining the position of edges in the first image by determining the position of relatively high frequencies in the first image ; and
   b) defining the mask by selecting a number of the determined edges which define at least part of an outline coinciding with the boundary of the selected portion of the first image.

2. A method according to claim 1, wherein the step of defining the mask comprises displaying the determined edges to enable an comprises displaying the determined edges to enable an operator to construct the mask outline (21).

3. A method according to claim 1 or claim 2, wherein prior to the step of automatically determining the position of edges in the first image, the first image is displayed to enable an operator roughly to define the area of the first image which includes the portion to be selected, and wherein said step is carried out on a portion of the first image defined within a region (17) of predetermined width containing the boundary (15) of the roughly defined area.

4. A method according to any of the preceding claims, wherein the step of automatically determining the position of edges in the first image comprises determining the position of relatively high frequencies in the first image using two dimensional "differentiation" in which the first image is convolved with a Laplacian edge function having zero weighting.

5. A method according to any of claims 1 to 3, wherein the step of automatically determining the position of edges in the first image comprises determining the position of relatively high frequencies in the first image by carrying out a double differentiation and comparing the result of the double differentiation with a predetermined threshold.

6. A method according to any of claims 1 to 3, wherein the step of automatically determining the position of edges in the firts image comprises applying a relatively high pass filter to the first image, and monitoring the output of the high pass filter to determine when the output is zero but with a non-zero gradient.

7. A method according to any of the preceding claims, wherein the mask (22) is defined such that the selected portion of the first image overlaps the second image, the method further comprising determining the content of pixels in the overlapping region by applying a predetermined algorithm to the content of corresponding pixels of the two images prior to merging.

8. A method according to claim 7, wherein the algorithm comprises a ramp function defining a gradual change from 0% of the selected portion of the first image and 100% of the second image to 0% of the second image and 100% of the selected portion of the first image.

9. A method according to claim 7 or claim 8, wherein the step of applying the algorithm comprises modifying the shape of the outline of the mask prior to the copying step.

10. Apparatus for merging a portion of a first digitally encoded image defined by a mask into a second digitally encoded image, the apparatus comprising processing means (1) ; and memory storage means (3, 4, 4A) for storing the first and second images and the merged images, the processing means (1) being adapted to copy into the second image that portion of the first image defined by the mask and to store the merged images in the memory means characterized in that the processing means is adapted to determine the position of edges in the first image by determining the position of relatively high frequencies in the first image to define the mask having an outline constituted by a number of the determined edges and coinciding with the boundary (16) of the selected portion of the first image and to store the mask in the memory means.

11. Apparatus according to claim 10, wherein the processing means comprises a suitably programmed computer.

**Patentansprüche**

1. Verfahren zum Einsetzen des Abschnittes eines ersten digital kodierten durch eine Maske definierten Bildes in ein zweites digital kodiertes Bild durch Einkopieren des Abschnittes des ersten durch die Maske definierten Bildes in das zweite Bild, gekennzeichnet durch

    a) die Lage der Ränder im ersten Bild wird dadurch bestimmt, daß die Lage der verhältnismäßig hohen Frequenzen im ersten Bild bestimmt wird und

    b) die Maske wird definiert, indem eine Anzahl von bestimmten Rändern ausgewählt wird, die zumindest einen Teil eines Umrisses definieren, der mit der Begrenzung des ausgewählten Abschnittes im ersten Bild zusammenfällt.

2. Verfahren nach Anspruch 1, bei dem die Maske definiert wird, indem die bestimmten Ränder angezeigt werden, damit ein Operateur den Maskenumriß (21) konstruieren kann.

3. Verfahren nach Anspruch 1 oder 2, bei dem vor dem automatischen Bestimmen der Lage der Ränder im ersten Bild das erste Bild dargestellt wird, damit ein Operateur den Bereich des ersten Bildes roh definieren kann, der den auszuwählenden Abschnitt beinhaltet, und bei dem der vorgenannte Schritt an einem Abschnitt des ersten Bildes ausgeführt wird, der in einem Bereich (17) vorbestimmter Breite definiert ist, die die Begrenzung (15) des roh definierten Bereiches enthält.

4. Verfahren nach einem der vorhergehenden Ansprüche, bei dem die Lage der Ränder im ersten Bild automatisch bestimmt wird, indem die Lage der relativ hohen Frequenzen im ersten Bild durch Anwendung einer zweidimensionalen "Differentiation" bestimmt wird, bei der das erste Bild mit einer LaPlace Randfunktion mit Null Gewichtung umrollt ist.

5. Verfahren nach einem der Ansprüche 1 bis 3, bei dem die Lage der Ränder im ersten Bild durch die Lage der relativ hohen Frequenzen im ersten Bild bestimmt wird, indem eine Doppeldifferentiation ausgeführt wird und das Ergebnis der Doppeldifferentiation mit einem vorbestimmten Schwellwert verglichen wird.

6. Verfahren nach einem der Ansprüche 1 bis 3, bei dem die Position der Ränder im ersten Bild durch Anwendung eines relativen Hochpaßfilters am ersten Bild automatisch bestimmt wird und der Ausgang des Hochpaßfilters überwacht wird, um zu bestimmen, wann der Ausgang Null ist jedoch einen Nicht-Null-Gradienten aufweist.

7. Verfahren nach einem der vorhergehenden Ansprüche, bei dem die Maske (22) derart definiert ist, daß der ausgewählte Bereich des ersten Bildes das zweite Bild überlappt und bei dem ferner der Inhalt der Pixel in dem überlappenden Bereich durch Anwenden eines vorbestimmten Algorithmus auf den Inhalt der entsprechenden Pixel in den beiden Bildern vor dem Zusammensetzen bestimmt wird.

8. Verfahren nach Anspruch 7, bei dem der Algorithmus eine Rampenfunktion umfaßt, die eine graduelle Änderung von 0% des ausgewählten Bereiches des ersten Bildes und 100% des zweiten Bildes bis 0% des zweiten Bildes und 100% des ausgewählten Bereichs des ersten Bildes definiert.

9. Verfahren nach Anspruch 7 oder 8, bei dem der Algorithmus angewendet wird, indem die Gestalt des Umrisses der Maske vor dem Kopieren modifiziert wird.

10. Vorrichtung zum Einsetzen eines Abschnittes eines ersten digital kodierten und durch eine Maske definierten Bildes in ein zweites digital kodiertes Bild mit einem Prozessor (1), Speichern (3, 4, 4A) zum Abspeichern der ersten und zweiten Bilder und der zusammengesetzten Bilder, wobei der Prozessor (1) in der Lage ist, den von der Maske definierten Abschnitt des ersten Bildes in das zweite Bild zu kopieren und die zusammengesetzten Bilder in dem Speicher zu speichern, dadurch gekennzeichnet, daß der Prozessor in der Lage ist, die Lage der Ränder im ersten Bild zu bestimmen, indem die Lage der relativ hohen Frequenzen im ersten Bild bestimmt wird, um die Maske mit einem Umriß zu definieren, der von einer Anzahl bestimmter Ränder gebildet ist und mit der Begrenzung (16) des ausgewählten Abschnitts im ersten Bild zusammenfällt und die Maske im Speicher abzuspeichern.

11. Vorrichtung nach Anspruch 10, wobei als Prozessor ein entsprechend programmierter Rechner vorgesehen ist.

## Revendications

1. Procédé de fusion d'une partie d'une première image numérisée définie par un masque dans une seconde image numérisée par la copie dans la seconde image de la partie de la première image définie par le masque, caractérisé par

    a) la définition automatique de la position des rebords dans la première image par la définition de la position de fréquences relativement hautes dans la première image ; et

    b) la définition du masque par la sélection d'un certain nombre des rebords déterminés qui définissent au moins une partie d'un contour coïncidant avec les limites de la partie sélectionnée de la première image.

2. Procédé selon la revendication 1, où l'étape de définition du masque comporte l'affichage des rebords déterminés afin de permettre à un opérateur de construire le contour du masque (21).

3. Procédé selon la revendication 1 ou la revendication 2, où avant l'étape de définition automatique de la position des rebords dans la première image, la première image est affichée pour permettre à un opérateur de définir approximativement la zone de la première image contenant la partie à sélectionner, et où ladite étape est exécutée sur une partie de la première image définie dans une région (17) de largeur prédéterminée contenant les limites (15) de la zone approximativement définie.

4. Procédé selon l'une des revendications précédentes, où l'étape de définition automatique de la position des rebords dans la première image comporte la définition de la position de fréquences relativement hautes dans la première image au moyen d'une "différenciation" bidimensionnelle où la première image est enroulée, une équation de Laplace des rebords présentant une pondération zéro.

5. Procédé selon une des revendications 1 à 3, où l'étape de définition automatique de la position des rebords dans la première image comporte la définition de la position de fréquences relativement hautes dans la première image en exécutant une double différenciation et une comparaison du résultat de la double différenciation avec un seuil prédéterminé.

6. Procédé selon une des revendications 1 à 3, où l'étape de définition automatique de la position des rebords dans la première image comporte l'application d'un filtre relativement passe-haut à la première image, et la surveillance de la sortie du filtre passe-haut afin de déterminer quand la sortie est égale à zéro mais avec un gradient non égal à zéro.

7. Procédé selon l'une des revendications précédentes, où le masque (22) est défini de telle manière que la partie sélectionnée de la première image chevauche la seconde image, le procédé comportant de plus la détermination de la teneur en pixels dans la région de chevauchement par l'application d'un algorithme prédéterminé à la teneur en pixels correspondants des deux images avant fusion.

8. Procédé selon la revendication 7, où l'algorithme comporte une fonction de rampe définissant un changement progressif allant de 0% de la partie sélectionnée de la première image et 100% de la seconde image à 0% de la seconde image et 100% de la partie sélectionnée de la première image.

9. Procédé selon la revendication 7 ou la revendication 8, où l'étape d'application de l'algorithme comporte la modification de la forme du contour du masque avant l'étape de copie.

10. Appareil de fusion d'une partie d'une première image numérisée définie par un masque en une seconde image numérisée, l'appareil comprenant un moyen de traitement (1) ; et des moyens de mise en mémoire (3, 4, 4A) visant à mémoriser les première et seconde images et les images fusionnées, le moyen de traitement (1) étant adapté pour copier dans la seconde image la partie de la première image définie par le masque et pour mémoriser les images fusionnées dans les moyens de mise en mémoire, caractérisé en ce que le moyen de traitement est adapté pour déterminer la position des rebords dans la première image en déterminant la position des fréquences relativement hautes dans la première image pour définir le masque présentant un contour composé d'un certain nombre des bords déterminés et coïncidant avec les limites (16) de la partie sélectionnée de la première image et pour mémoriser le masque dans les moyens de mise en mémoire.

11. Appareil selon la revendication 10, où le moyen de traitement comporte un ordinateur à programmation appropriée.

Fig.1.

TEMP STORE — 4A

1st STORE — 3

C Y M

4 — 2nd STORE

C Y M

CPU — 1

2

5 — DIGITIZING TABLE

6

Fig.3a.

LUMINANCE

Fig.3b.

7 8

Fig.3c.

9 10 11

Fig.4.

12 — MASK

⊛

13 — EDGE FUNCTION

⇒

14 — MODIFIED MASK

Fig.5.

# Fig.2.

```
┌─────────────────────────────────────┐
│         DISPLAY 2nd IMAGE            │
└─────────────────┬───────────────────┘
                  ▼
┌─────────────────────────────────────┐
│         DRAW ROUGH OUTLINE          │
└─────────────────┬───────────────────┘
                  ▼
┌─────────────────────────────────────┐
│       SELECT COLOUR SEPARATION      │
└─────────────────┬───────────────────┘
                  ▼
┌─────────────────────────────────────┐
│            DIFFERENTIATE             │
└─────────────────┬───────────────────┘
                  ▼
┌─────────────────────────────────────┐
│          DIFFERENTIATE AND          │
│        COMPARE WITH THRESHOLD       │
└─────────────────┬───────────────────┘
                  ▼
┌─────────────────────────────────────┐
│    REDUCE EDGE TO SINGLE PIXEL WIDTH │
└─────────────────┬───────────────────┘
                  ▼
┌─────────────────────────────────────┐
│       REMOVE DEAD END BRANCHES      │
└─────────────────┬───────────────────┘
                  ▼
┌─────────────────────────────────────┐
│       DISPLAY EDGE AND RETOUCH      │
└─────────────────┬───────────────────┘
                  ▼
┌─────────────────────────────────────┐
│       FILL EDGE TO GENERATE MASK    │
└─────────────────┬───────────────────┘
                  ▼
┌─────────────────────────────────────┐
│    CONVOLVE MASK WITH EDGE FUNCTION │
└─────────────────┬───────────────────┘
                  ▼
┌─────────────────────────────────────┐
│        COPY MASKED PORTION OF       │
│       2nd IMAGE INTO DEFINED        │
│      AREA OF 1st IMAGE USING        │
│           MODIFIED MASK             │
└─────────────────────────────────────┘
```

Fig.6A.

Fig.6B.

Fig.6C.